# EUROPÄISCHE PATENTANMELDUNG

(11) **EP 0 876 746 A1**
(43) Veröffentlichungstag der Anmeldung: **11.11.1998**
(21) Anmeldenummer: 98108234.0
(22) Anmeldetag: 05.05.1998
(51) Int. Cl.: A01B 17/00

(54) **Antriebseinrichtung für Pflüge, insbesondere Drehpflüge**

(30) Priorität: 09.05.1997 DE 19719208
(71) Anmelder: Schiefermair, Augustinus, A-4521 Schiedlberg (AT)
(72) Erfinder: Schiefermair, Augustinus, A-4521 Schiedlberg (AT)
(74) Vertreter: Petra, Elke, Dipl.-Ing.

(57) **Zusammenfassung**

Es wird eine Antriebseinrichtung für Pflüge, insbesondere Drehpflüge beschrieben, mit mindestens einer Pflugschar, die ein mit einem Pfluganbaubock o. dgl. des Traktors verbundenes Grindel angeschlossen ist sowie mindestens einem jedem Pflugkörper jeder Pflugschar furchenseitig zugeordneten Zerkleinerungswerkzeug, das von einer Zapfwelle des Traktors, aufeinanderfolgend, über ein erstes Getriebe, eine Antriebswelle, ein Zweites, am Grindel befestigtes Winkelgetriebe, eine Gelenkwelle und ein am Grindel schwenkbar befestigten Ausleger gelagertes Winkelgetriebe angetrieben wird. Wesentlich ist dabei, daß das zweite Getriebe (20) und das die Welle (5) des Zerkleinerungswerkzeuges (4) antreibende Winkelgetriebe (31) über eine Gelenkwelle (6) trieblich miteinander verbunden sind. Hierdurch wird eine konstruktiv einfache, ruhig arbeitende, schmutz- und störunanfällige, zumindest z.T. einfach nachrüstbare und käufliche Normteile verwendende Kraftübertragung vom Zapfwellenantrieb des Traktors zur Welle des Zerkleinerungswerkzeuges geschaffen.

## Beschreibung

Die Erfindung bezieht sich auf eine Antriebseinrichtung für Pflüge, insbesondere Drehpflüge gemäß Oberbegriff des Anspruchs 1, durch die die Furchen während des Pflügens erfaßt und zerkleinert bzw. zerkrümelt werden.

Zwar kann herkömmlich die Zerkleinerung in einem zweiten Arbeitsgang mittels einer altbekannten Egge erfolgen, doch erhöht sich dadurch der Zeit- und Energiebedarf gegenüber einer Zerkleinerung der Erde direkt hinter dem Pflug erheblich.

Auch sind aus AT 387 127 sowie dem Zusatz AT 392 387 Zerkleinerungswerkzeuge hinter Drehpflügen bekannt, die keine Antriebseinrichtungen besitzen, da eine Kraftübertragung vom Traktor zur Welle des Werkzeuges vielen zu aufwendig erscheint. Diese Zerkleinerungswerkzeuge bedürfen dann jedoch eines starken Andrucks auf die Erde, um nicht Gefahr zu laufen, ohne Drehung und damit ohne die beabsichtigte Wirkung, nämlich die Zerkleinerung und Zerkrümelung der aufgeworfenen Erde, hinter dem Pflug nur hergezogen zu werden.

Desweiteren ist aus der EP 0 532 492 eine Antriebseinrichtung für Drehpflüge bekannt, durch die ein nachgeordnetes Zerkleinerungswerkzeug in Drehbewegung versetzt wird. Dabei weist z.B. der Drehpflug drei Doppelpflugscharen auf, die an ein mit einem Pfluganbaubock oder dergl. des Traktors verbundenes Grindel angeschlossen sind. Einem jedem Pflugkörper einer jeden Pflugschar ist furchenseitig ein Zerkleinerungswerkzeug zugeordnet, das von einer Zapfwelle des Traktors - aufeinanderfolgend - über ein erstes Getriebe, eine Antriebswelle, ein zweites, am Grindel befestigtes Getriebe und einem am Grindel verschwenkbaren Ausleger gelagerten Antriebswelle des Zerkleinerungswerkzeuges angeordneten Antriebsrad angetrieben wird. Dabei sind das zweite Getriebe und das Antriebsrad des Zerkleinerungswerkzeuges über zwei Endlos-Ketten in Verbindung mit vier Kettenrädern trieblich miteinander verbunden, wobei für das zweite Getriebe und das Zugmittel je ein Gehäuse bzw. eine Verkleidung vorgesehen ist.

Nachteilig bei derartigen Zugmittelgetrieben ist, daß das Zugmittel nicht zu locker durchhängen darf, sondern immer eine richtige Spannung benötigt. Der Zugmittelantrieb muß zudem verstellbar sein, um eine Längung nach längerem Betrieb ausgleichen zu können. Dieser Nachteil betrifft alle Zugmittelgetriebe gleichermaßen, ob diese nun Ketten, Keilriemen, Flachriemen o.ä. verwenden. Insbesondere müssen hier die beiden Kettentriebe von der Antriebswelle am Grindel zur Welle des Zerkleinerungswerkzeuges spannbar sein. Beim Spannen insbesondere der zweiten, langen Kette ist die fest mit dem Getriebegehäuse verbundene Verkleidung jedoch sehr hinderlich, so den eine ordnungsgemäße Spannungseinstellung zumindest dieser Kette nicht möglich ist, was gegebenenfalls zum geräuschvollen Anschlagen der Kette am Gehäuse führt.

Weiterhin ist bei derartigen Kettengetrieben die Schmutzempfindlichkeit nachteilig, die sowohl eine wirksame Abdeckung oder Verkleidung der sich drehenden Teile notwendig macht, als auch deren kontinuierliche Schmiermittelversorgung. Ansonsten ist mit sehr hohem Verschleiß zu rechnen, der nach kurzer Zeit zu Betriebsstörungen führen kann.

Der Erfindung liegt daher die Aufgabe zugrunde, eine Antriebseinrichtung o.g. Gattung anzugeben, durch die eine konstruktiv möglichst einfache, ruhig arbeitende, schmutz- und störunanfällige, zumindest z.T. einfach nachrüstbare und käufliche Normteile vervendende Kraftübertragung vom Zapfwellenantrieb des Traktors zur Welle des Zerkleinerungswerkzeuges geschaffen wird.

Diese Aufgabe wird erfindungsgemäß durch eine Antriebseinrichtung mit den kennzeichnenden Merkmalen des Anspruchs 1 gelöst. In den Unteransprüchen sind vorteilhafte Ausgestaltungen der Erfindung beschrieben.

Demgemäß ist die Welle des Zerkleinerungswerkzeuges mittels eines Winkelgetriebes angetrieben, das über eine Gelenkwelle angetrieben wird. Diese Gelenkwelle wird über ein 90°-Winkelgetriebe von einer Antriebswelle angetrieben, die am Grindel entlang verläuft und über ein Getriebe am Pfluganbaubock vom Zapfwellenantrieb des Traktors angetrieben wird.

Dadurch ist einerseits der gesamte Antrieb gekapselt und schmutzgeschützt. Zudem sind die einzelnen Bauteile, wie Getriebe, Winkelgetriebe, Antriebs- und Gelenkwellen problemlos als Normteile erhältlich.

In vorteilhafter Weise besteht das zweite, am Grindel befestigte, Getriebe aus einem an sich bekannten 90°-Winkelgetriebe, das zwei Anschlußzapfen mit jeweils z.B. Keilwellenprofil zur drehfesten Verbindung mit der am Grindel entlanggeführten Antriebswelle und der zur Zerkleinerungswelle führenden Gelenkwelle, ausweist. Zweckmäßigerweise ist das Winkelgetriebe derart am Grindel befestigt bzw. angeschraubt, den der Anschlußzapfen zur Verbindung mit der vom Traktor kommenden Antriebswelle parallel zur Längsachse des Grindels verläuft und der Anschlußzapfen zur Verbindung mit der zur Zerkleinerungswelle führenden Gelenkwelle senkrecht durch das Grindel, mit Hilfe z.B. einer passenden Bohrung, hindurchgeführt ist. Die Befestigung des Getriebes am Grindel kann mit einfachen Blechplatten und Schweißpunkten oder mehreren Schrauben ausgeführt sein. Es sind also relativ wenige, einfache und handelsübliche Bestandteile hierfür vorgesehen.

Ebenso möglich ist jedoch, das Winkelgetriebe über eine eigenständige Halterung am Grindel zu fixieren. Diese Halterung kann zweiteilig ausgeführt sein und flansch- bzw. schellenartig in beliebiger Längsposition am Grindel klemmend befestigt werden. Die Halterung kann beispielsweise wie eine Schelle, mit zwei U-förmigen Hälften durch ein Scharnier verbunden, mit nur einer Schraubklemmung am Grindel befestigt sein.

So wird einerseits eine Schweißverbindung des Winkelgetriebes am Grindel überflüssig, was die Antriebseinrichtung besonders für die herstellerunabhängige Nachrüstung geeignet macht. Andererseits ist durch die flansch- bzw. schellenartige Halterungsausbildung die beliebige Positionierung in Grindel-Längsrichtung, auch bei verschiedenen Grindeldurchmessern und -konturen, gewährleistet.

So ist z.B. günstig, wenn bei rechteckigem Grindelquerschnitt die Halterung aus einem Teil besteht, das eine U-förmige Kontur aufweist, und das über das Grindel geschoben werden kann, dieses damit auf drei Seiten umschließend, wobei mittels einer die vierte Grindelseite bedeckenden Platte der Halterung diese über Schraubelemente spannend mit dem Grindel verbunden wird.

Als weiteres Drehübertragungselement zur Kraftübertragung zur Zerkleinerungswelle kommt zweckmäßigerweise eine an sich bekannte Gelenkwelle, bestehend in dieser Reihenfolge aus einem Anschlußstück mit z.B. Keilwellenprofil zur drehfesten formschlüssigen Verbindung mit dem Winkelgetriebeausgang, einem daran anschließenden Kardangelenk, einem längeren zweiteiligen Wellenstück, daß sich zur Längenanpassung ineinander verschieben läßt, einem weiteren Kardangelenk sowie einem Anschlußstück mit z.B. Keilwellenprofil zur drehfesten formschlüssigen Verbindung mit einem weiteren Getriebe oder Wellenstück.

Um die Wellenteile, insbesondere die Kardangelenke und das zweiteilige, ineinander verschiebliche Mittelteil der Gelenkwelle vor Schmutz- und Witterungseinflüssen zu schützen und aus Gründen der Arbeitssicherheit, weist die Gelenkwelle einen Schutzüberzug aus z.B. Hartkunststoff auf, der lose auf der Gelenkwelle aufliegt und mittels einer Kette an einer geeigneten Stelle des Rahmens befestigt wird, um eine Drehung der Hülle zu verhindern. Anstatt des bisher notwendigen zweistufigen Kettenantriebs kann sich auf diese Weise ein wesentlicher Vorteil, insbesondere in der schmutzanfälligen Landwirtschaft ergeben.

Die Welle des Zerkleinerungswerkzeuges ist günstigerweise an mehreren an sich bekannten Auslegern gelagert, wobei diese Ausleger zweiteilig ausgeführt sein können und sich teleskopartig in der Länge verstellen und fixieren lassen. Dies kann durch eine Überlappung der beiden Auslegerteile, Langlöcher und Schraubverbindungen sichergestellt werden. Ebenso möglich ist eine einteilige Ausführung, wobei ein geringfügiges Längsspiel durch eine Lagerung der Ausleger in Langlöchern gewährleistet sein kann. Der notwendige Längenausgleich bei der Schwenkbewegung der Zerkleinerungswelle ist dabei durch die längsverschiebliche Gelenkwelle sichergestellt.

Selbstverständlich kann das Befestigungsblech für die Lagerung des Auslegers auch separat von der Halterung für das Winkelgetriebe ausgeführt sein. Die Befestigung am Grindel kann dann entweder durch schellenartige Befestigung oder durch Verschraubung durch eine am Grindel angebrachte Durchgangsbohrung erfolgen.

Um über die Gelenkwelle, die in einem rechten Winkel auf die Welle des Zerkleinerungswerkzeuges trifft, diese antreiben zu können, ist die Zwischenschaltung eines weiteren Winkelgetriebes notwendig. Dieses besitzt zweckmäßigerweise einen Wellenzapfen zum Antrieb, der mit der Gelenkwelle drehfest verbunden ist, und zwei sich gleichsinnig drehende Wellenzapfen zum Abtrieb, die in einem Winkel von 90° zum Antriebswellenzapfen stehen. Die Abtriebswellenzapfen dieses Winkelgetriebes sind fest mit der Welle des Zerkleinerungswerkzeuges verbunden, so daß das Winkelgetriebe zentral auf dieser Welle sich befindet.

Um ein Verdrehen und Kippen dieses Winkelgetriebes zu verhindern, weist es mindestens einen, besser aber zwei, Auslegerstangen auf, die an den äußeren Kanten des Getriebes befestigt sind und an dem gleichen Drehpunkt wie die Auslegerstangen zur Halterung der Welle des Zerkleinerungswerkzeuges befestigt sind. Somit ist das Winkelgetriebe drehfest auf der Welle fixiert und schwenkt gemeinsam mit dieser, den Bodenunebenheiten folgend, mit.

Im folgenden wird die Erfindung anhand eines Ausführungsbeispiels unter Bezug auf die Zeichnung näher erläutert.

Es zeigt:
- Fig. 1:: eine Seitenansicht eines dreischarigen Drehpfluges mit der erfindungsgemäßen Antriebseinrichtung,
- Fig. 2:: eine Antriebseinrichtung in perspektivischer Darstellung,
- Fig. 3:: eine Detailansicht der Verankerung des Winkelgetriebes zur Verhinderung des Kippens
- Fig. 4:: eine Alternativ-Variante des Befestigungsblechs zur Lagerung des Auslegers in perspektivischer Darstellung.

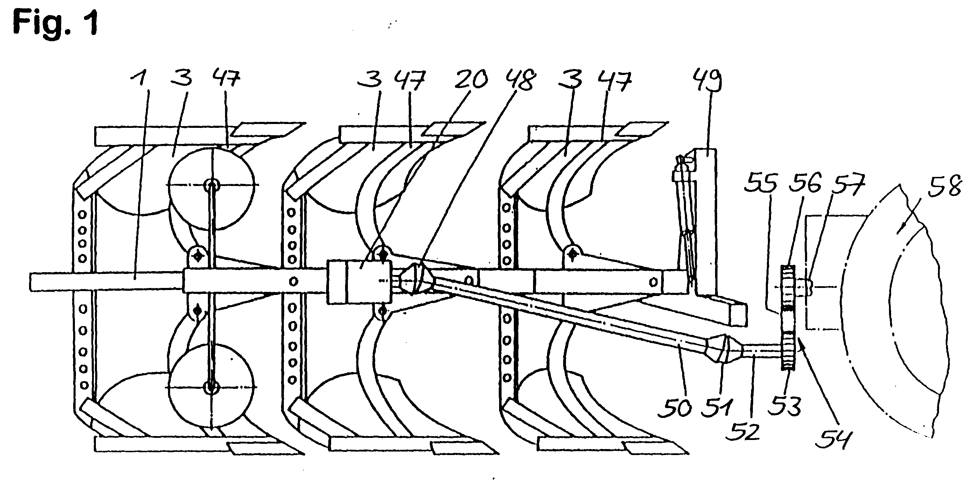

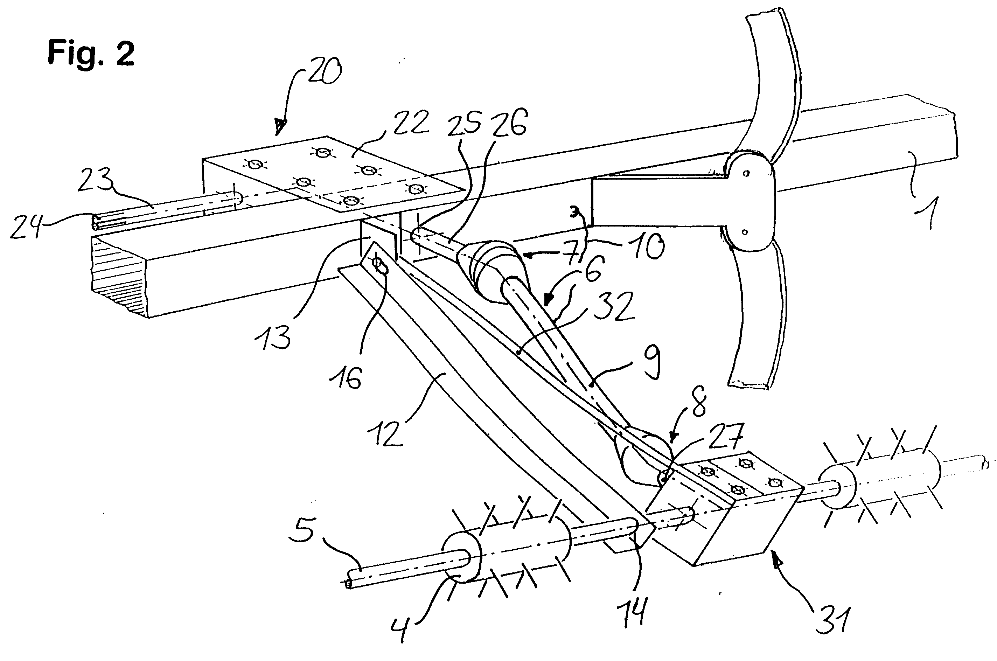

Insbesondere in Fig. 1 sind mit 3 die Pflugscharen - im vorliegenden Ausführungsbeispiel drei Doppelpflugscharen - bezeichnet, welche über ein Grindel 1 an einem in nicht dargestellter Weise mit dem Traktor 58 verbundenen Pfluganbaubock 49 od.dgl. drehbar verbunden sind. Jede der Pflugscharen 3 besitzt zwei einander gegenüberliegende Pflugkörper 47 bzw. Streichbleche, die entlang von Vertikalführungen 46 wechselweise in Arbeitsstellung gebracht werden. Jeder Doppelpflugschar 3 des Pflugkörpers 47 ist ein Zerkleinerungswerkzeug 4 zugeordnet, welches in Fig. 1 der Übersichtlichkeit halber nicht dargestellt ist, jedoch aus Fig. 2 z.T. ersichtlich wird. Die Zerkleinerungswerkzeuge 4 dienen der Zerkleinerung und Verteilung der von den Pflugkörpern 47 bzw. Streichblechen aufgeworfenen Erde und schließen an den jeweils abgesenkten Pflugkörper 47 an. Die Zerkleinerungswerkzeuge 4 sind im dargestellten Ausführungsbeispiel als Zinkenrad ausgebildet. Die Zerkleinerungswerkzeuge 4 sitzen auf einer ihnen gemeinsamen, antreibbaren Welle 5, welche von einer Traktorzapfwelle 57 über ein erstes Getriebe 54, das ein Vor- und Rückganggetriebe sein kann, weiters über eine Antriebswelle 50 und ein zweites Getriebe 20 angetrieben wird. Das erste, traktorseitige Getriebe 54 ist mit der Zapfwelle 57 des Traktors 58 lösbar verbunden, sodaß es je nach Bedarf an den Traktor angesetzt oder abgenommen werden kann. Das Getriebe 54 ist so ausgebildet, daß es von der Zapfwelle 57 nach unten unterhalb des Pfluganbaubocks 49 reicht, wo auch die Abtriebswelle 52 des traktorseitigen Getriebes 54 zu liegen kommt. Im vorliegenden Fall ist dieses Getriebe 54 aus zwei Kettenrädern 53, 56 und einer diese verbindenden Kette 55 aufgebaut, wobei das obere Kettenrad 56 mit der Zapfwelle 57 des Traktors 58 und das untere Kettenrad 53 mit der Abtriebswelle 52 verbunden ist. Selbstverständlich kann außer der dargestellten und beschriebenen Variante das Getriebe 54 noch ein Vorgelege umfassen und aus Zahnrädern, Kettenrädern od. dgl. in geeigneter Kombination bestehen.

Die Abtriebswelle 52 des ersten, traktorseitigen Getriebes 54 treibt über ein Gelenk 51 eine schräg nach oben verlaufende Antriebswelle 50 an, die ihrerseits über ein Gelenk 48 ein zweites Getriebe 20 antreibt, welches - wie in Fig. 2 dargestellt - auf einer Seite des Grindels 1 ein Antriebsrad 8 sowie auf der gegenüberliegenden Seite des Grindels 1 eine Gleitrolle 9 aufweist.
Die Antriebswelle 50 treibt (Fig. 1 und 2) über ein Gelenk 48 das Antriebsrad 8 des Winkelgetriebes 20 an, das mittels Gelenkwelle 6 über ein an der Welle 5 befindliches weiteres Winkelgetriebe 31 die Welle 5 und damit das Zerkleinerungswerkzeug 4, antreibt. Der Antrieb der Welle 5 erfolgt in der Richtung, daß die Zerkleinerungswerkzeuge 4 die zerkrümelten Erdteile von den Pflugscharen 3 wegtransportieren. Das Winkelgetriebe 31 weist eine Übersetzung auf, die die Umdrehungsgeschwindigkeit der Welle 5 gegenüber der Zapfwellengeschwindigkeit des Traktors etwa halbiert.

Weiterhin ist in Fig. 2 der Verlauf und die Führung der Kraftübertragung von der vom Getriebe 54 kommenden Antriebswelle 50 mittels Winkelgetriebe 20, daran angeschlossenen Gelenkwelle 6, die zu einem auf der Welle 5 des Zerkleinerungswerkzeuges 4 sitzenden Winkelgetriebe 31 erkennbar.

Das Winkelgetriebe 20 kann beispielsweise ein übliches Normteil sein, wie es im Handel erhältlich ist. Es ist, wie in der Fig. 2 beispielhaft ausgeführt, über eine Platte 22 mit mehreren Schrauben seitlich am Grindel 1 fixiert. Vorzugsweise ist eine weitere hier nicht sichtbare Platte unterhalb des Grindels über Schrauben fixiert, so daß eine U-förmige Halterung entsteht, die das Grindel 1 umfaßt. Der mit der Antriebswelle 50 formschlüssig, z.B. über ein Keilwellenprofil 24, verbundene Wellenzapfen liegt dabei parallel zur Längserstreckung des Grindels 1. Er bildet den Antrieb des Winkelgetriebes 20. Der den Abtrieb des Winkelgetriebes 20 bildende Wellenzapfen 26 steht dementsprechend in einem Winkel von 90° zu dem Antriebswellenzapfen 23 und weist an seinem Ende ebenfalls ein Anschlußprofil, z.B. ein Keilwellenprofil, auf. Da seine Drehachse im rechten Winkel zur Längserstreckung des Grindels 1 steht und das Winkelgetriebe 20 von der perspektivischen Ansicht der Fig. 2 hinter dem Grindel 1 befestigt ist, muß der Abtrieb durch das Grindel 1, z.B. mit einer Bohrung oder Wellendurchführung 25, hindurchgeführt sein.

An diesem Wellenzapfen 26, der den Abtrieb des Winkelgetriebes 20 bildet, ist eine Gelenkwelle 6 mit drei durch zwei Kardangelenke 7 und 8 verbundenen geraden Wellenteilen angeschlossen. Das Mittelteil der Gelenkwelle 6 besteht dabei aus zwei formschlüssig miteinander verbundenen und ineinander frei verschieblichen Wellenhälften, wodurch ein Längenausgleich bei der Schwenkbewegung der Welle 5 entsprechend den Bodenunebenheiten des Ackers gewährleistet ist. Die Welle 6 weist zudem eine Schutzhülle 9 auf, die auch über die Kardangelenke 7 und 8 reicht und eine Berührung und damit Gefährdung im Betrieb verhindert. Um ein Mitdrehen mit der Gelenkwelle 6 zu verhindern, weist die Schutzhülle 9 eine Kette 10 auf, die mit einem feststehenden Teil des Drehpfluges, z.B. dem Grindel 1, verbunden ist. Diese Verbindung ist zweckmäßigerweise leicht lösbar auszuführen, z.B. über einen Haken bzw. Karabinerhaken.

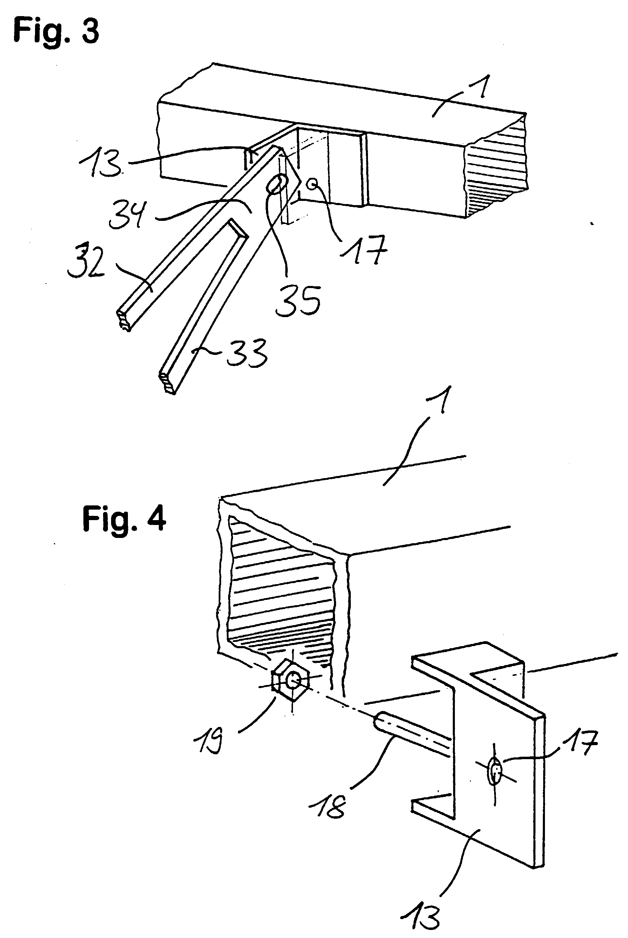

Die Gelenkwelle 6 führt schließlich zu einem weiteren Winkelgetriebe 31, das sich mittig auf der Welle 5 des Zerkleinerungswerkzeuges 4 befindet und die Drehung der Gelenkwelle 6 um 90° umlenkt und gleichzeitig eine Übersetzung beinhaltet, womit die Umdrehungsgeschwindigkeit reduziert wird. Die Welle 5 dreht sich somit mit einer geringeren, vorzugsweise der haloben, Umdrehungsgeschwindigkeit wie die Zapfwelle des Traktors. Um einerseits die Welle 5 des Zerkleinerungswerkzeuges 4 zusätzlich zu lagern und zudem das Winkelgetriebe 31 gegen ein Verkippen zu sichern, ist als Drehmomentabstützung eine Verstrebung 32, 33 vorgesehen. Diese besteht aus zwei an den äußeren Gehäusekanten des Winkelgetriebes 31 angebrachten, z.B. mit Hilfe einer Platte verschraubten oder verschweißten, Streben 32 und 33, die in Richtung auf das Grindel 1 aufeinander zulaufen und in ein gemeinsames Blech 34 münden, wie in Fig. 3 detaillierter ausgeführt. Dieses Blech weist ein Langloch 35 auf, das zusammen mit einer Bolzenverbindung mit dem Befestigungsblech 13 für ein geringes Längsspiel beim Verschwenken der Welle 5 sorgt.

Weiterhin ist am Grindel 1 das Befestigungsblech 13 angebracht, an dem der Ausleger 12 schwenkbar um einen Schwenkpunkt 17 befestigt ist. Der Ausleger 12 weist wie die Drehmomentabstützung 32, 33, 34 des Winkelgetriebes 31 an seinem oberen Ende ein Langloch auf. Damit ist er mit einem hier nicht gezeichneten Bolzen gemeinsam mit der Drehmomentabstützung 32, 33, 34 an dem Befestigungsblech 13 drehbar gelagert.

Am seinem unteren Ende weist der Ausleger 12 eine Wellenlagerung 14 für die Welle 5 des Zerkleinerungswerkzeuges 4 auf.

Die Fig. 3 zeigt in einem Detailausschnitt die aus den in das Blech 34 mündenden Streben 32 und 33 bestehende Drehmomentabstützung für das Winkelgetriebe 31. Das Blech 34 weist ein Langloch 35 auf, mit dem es mittels eines hier nicht gezeichneten Bolzens mit dem Befestigungsblech 13 verbunden ist. Der Bolzen ist also spielfrei in der Bohrung 17 des Befestigungsblechs 13 eingesetzt und erlaubt eine Verschwenkung und geringfügige Längsverschieblichkeit des Blechs 34 mit den daran befestigten Streben 32 und 33.

Die Fig. 4 zeigt eine Alternativ-Variante für die Befestigung des Auslegers 12. Dieser kann an ein separates Befestigungsblech 13 um einen an diesem durch eine Bohrung festgelegten Schwenkpunkt 17 befestigt sein.

Das Befestigungsblech 13 kann durch schellenartige Befestigung längsverschieblich am Grindel 1 fixiert sein. Ebenso ist aber auch eine Befestigung, wie in Fig. 4 dargestellt, mit am Befestigungsblech 13 angebrachten Gewindebolzen 18, welcher durch ein hier nicht eingezeichnetes Durchgangsloch am Grindel 1 geführt ist und rückseitig an diesem mit einer Mutter 19 fixiert ist, möglich.

### Bezugszeichenliste

- 1.: Grindel
- 2.: -
- 3.: Pflugschar
- 4.: Zerkleinerungswerkzeug
- 5.: Welle
- 6.: Gelenkwelle
- 7.: Kardangelenk
- 8.: Kardangelenk
- 9.: Schutzhülle
- 10.: Kette
- 11.: -
- 12.: Ausleger
- 13.: Befestigungsblech
- 14.: Wellenlagerung
- 15.: -
- 16.: Langloch
- 17.: Drehpunkt
- 18.: Gewindebolzen
- 19.: Mutter
- 20.: Winkelgetriebe
- 21.: Halterung
- 22.: Platte
- 23.: Wellenzapfen
- 24.: Anschlußprofil
- 25.: Wellendurchführung
- 26.: Wellenzapfen
- 27.: Wellenzapfen
- 28.: -
- 29.: -
- 30.: -
- 31.: Winkelgetriebe
- 32.: Strebe
- 33.: Strebe
- 34.: Blech
- 35.: Langloch
- 36.: -
- 37.: -
- 38.: -
- 39.: -
- 40.: -
- 41.: -
- 42.: -
- 43.: -
- 44.: -
- 45.: -
- 46.: -
- 47.: Pflugkörper
- 48.: Gelenk
- 49.: Pfluganbaubock
- 50.: Antriebswelle
- 51.: Gelenk
- 52.: Abtriebswelle
- 53.: Kettenrad
- 54.: Getriebe
- 55.: Kette
- 56.: Kettenrad
- 57.: Zapfwelle
- 58.: Traktor
- 59.: -
- 60.: -

## Patentansprüche

1. Antriebseinrichtung für Pflüge, insbesondere Drehpflüge, mit mindestens einer Pflugschar, die an ein mit einem Pfluganbaubock od. dgl. des Traktors verbundenes Grindel angeschlossen ist, sowie mindestens einem jedem Pflugkörper jeder Pflugschar furchenseitig zugeordneten Zerkleinerungswerkzeug, das von einer Zapfwelle des Traktors, aufeinanderfolgend, über ein erstes Getriebe, eine Antriebswelle, ein zweites, am Grindel befestigtes Winkelgetriebe, einer Gelenkwelle und einem am Grindel verschwenkbar befestigten Ausleger gelagertem Winkelgetriebe angetrieben wird, wobei das zweite Getriebe (20) und das die Welle (5) des Zerkleinerungswerkzeuges (4) antreibende Winkelgetriebe (31) über eine Gelenkwelle (6) trieblich miteinander verbunden sind.

2. Antriebseinrichtung nach Anspruch 1, dadurch gekennzeichnet,
daß das zweite Getriebe (20) aus einem an sich bekannten Winkelgetriebe besteht, bei dem zwischen der Antriebs- und der Abtriebswelle ein Winkel von ca. 90° vorgesehen ist.

3. Antriebseinrichtung nach Anspruch 2, dadurch gekennzeichnet,
daß das Winkelgetriebe (20) mit Hilfe mindestens einer Platte (22) derart am Grindel (1) fixiert ist, daß der Wellenzapfen (23) der Antriebswelle parallel zur Längsachse des Grindels ist und daß der Wellenzapfen (26) der Abtriebswelle senkrecht durch das Grindel (1) mit einer Wellendurchführung (25) hindurchgeführt ist.

4. Antriebseinrichtung nach Anspruch 1, dadurch gekennzeichnet,
daß das Winkelgetriebe (20) über eine abnehmbare Halterung am Grindel (1) befestigt sind, die mindestens zweiteilig ausgeführt ist und flanschartig in beliebiger Längsposition am Grindel (1), dieses umfangsmäßig in Art einer Schelle umgreifend, klemmend befestigbar ist.

5. Antriebseinrichtung nach Anspruch 4, dadurch gekennzeichnet,
daß bei einem Grindel (1) mit rechteckigem Querschnitt, die Halterung aus einer U-förmigen, das Grindel (1) auf drei Seiten übergreifenden Schelle und einer die vierte Grindelseite bedeckenden Platte besteht, die über Schraubelemente miteinander über das Grindel (1) spannend befestigbar sind.

6. Antriebseinrichtung nach Anspruch 1, dadurch gekennzeichnet,
daß die Welle (5) des Zerkleinerungswerkzeuges (4) an mehreren Auslegern (12) gelagert ist, welche an einem Befestigungsblech (13) um einen Drehpunkt (17) nahe am Grindel (1) schwenkbar befestigt sind und welche jeweils mittels Schraubverbindung und Langlöchern (16) in beiden Teilen der Ausleger (12) fixierbar sind.

7. Antriebseinrichtung nach Anspruch 6, dadurch gekennzeichnet,
daß die Ausleger (12) um einen Drehpunkt (17) an einem Befestigungsblech (13) nahe am Grindel (1) schwenkbar befestigt sind, wobei das Befestigungsblech (13) entweder an der Halterung (21) z.B. durch Schweißung befestigt ist oder als separates Bauteil am Grindel lösbar befestigt ist, z.B. schellenartig oder durch Anschrauben.

8. Antriebseinrichtung nach Anspruch 7, dadurch gekennzeichnet,
daß das separat ausgeführte Befestigungsblech (13) eine U-förmige, das Grindel (1) auf drei Seiten teilweise umgreifende Halterung aufweist, die über einen Gewindebolzen (18) und eine Mutter (19) am Grindel (1) durch Verschraubung befestigt ist, wobei für die Durchführung des Gewindebolzens (18) am Grindel (1) ein Bohrloch angebracht ist.

9. Antriebseinrichtung nach Anspruch 1, dadurch gekennzeichnet,
daß das Winkelgetriebe (31) eine Übersetzung aufweist, wodurch die Umdrehungsgeschwindigkeit der Zapfwelle (57) des Traktors (58) reduziert wird.

10. Antriebseinrichtung nach Anspruch 9, dadurch gekennzeichnet,
daß die Übersetzung des Winkelgetriebes (31) vorzugsweise 2:1 beträgt.
